(19) Europäisches Patentamt / European Patent Office / Office européen des brevets

(11) **EP 3 695 203 B1**

(12) **EUROPEAN PATENT SPECIFICATION**

(45) Date of publication and mention
of the grant of the patent:
**25.09.2024   Bulletin 2024/39**

(21) Application number: **18796344.2**

(22) Date of filing: **15.10.2018**

(51) International Patent Classification (IPC):
*G01N 15/06* (2024.01)     *B01D 5/00* (2006.01)
*G01N 21/3554* (2014.01)     *G01N 15/14* (2024.01)

(52) Cooperative Patent Classification (CPC):
**G01N 15/065; B01D 5/0009; B01D 5/0027;
B01D 5/003; B01D 5/0051; G01N 21/4738;**
G01N 2015/0038; G01N 2015/0046

(86) International application number:
**PCT/US2018/055911**

(87) International publication number:
**WO 2019/075474 (18.04.2019 Gazette 2019/16)**

(54) **PARTICLE CONDENSATION SYSTEM**

PARTIKELKONDENSATIONSSYSTEME

SYSTÈME DE CONDENSATION DE PARTICULES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.10.2017   US 201762572394 P
12.10.2018   US 201816159604**

(43) Date of publication of application:
**19.08.2020   Bulletin 2020/34**

(73) Proprietor: **Aerosol Dynamics Inc.
Berkeley, California 94710 (US)**

(72) Inventors:
• **HERING, Susanne Vero
Berkeley, California 94710 (US)**
• **SPIELMAN, Steven Russel
Berkeley, California 94710 (US)**
• **LEWIS, Gregory Stephen
Berkeley, California 94710 (US)**

(74) Representative: **RGTH
Patentanwälte PartGmbB
Neuer Wall 10
20354 Hamburg (DE)**

(56) References cited:
**EP-A1- 0 568 461     JP-B2- 4 108 034
US-B2- 7 494 567     US-B2- 9 610 531**

## Description

## BACKGROUND

Many of the particles that are suspended in air, or other gases, are too small to be easily detected or collected. For example, most particles found in ambient air are less than 100 nm in diameter. At these small sizes it is difficult to count individual particles optically, or to collect them inertially. One approach for circumventing this limitation is to enlarge these ultrafine particles through condensation to form micrometer sized droplets that are more readily detected or manipulated. Currently, particle enlargement is employed in many commercially available condensation particle counters, as well as in condensation-based particle collectors, and air-to-air particle concentrators.

Many condensation-based instruments contain a wick that holds the working fluid that vaporizes, and subsequently condenses on the particles. The performance of these instruments depends on maintaining a saturated wick, that is a wick that is filled to near, or at, capacity with the condensable working fluid. In most instruments the saturation of the wick is ensured by maintaining direct contact between the wick and a liquid reservoir. In portable condensation instruments which require tolerance to tipping and motion, or operation in microgravity environments, it is not possible to use liquid reservoirs. For such devices, all of the working fluid must be held within the wick itself. Typically, these reservoirless instruments start with a saturated wick, but subsequently fail after some hours of use as the condensing fluid is consumed. US 9 610 531 B2 discloses a system and a method for particle enlargement with continuously wetted wicks including a container into which a flow of particle-laden air is introduced in a laminar manner through an inlet and to an outlet. The container has a first section, a second section and a third section though which the particle-laden air flows between the inlet and the outlet. The temperature of the second section is warmer than that of the first section at the inlet and the third section at the outlet. In one embodiment, a continuous wick spanning an interior wall of the first second, second section and third section, said wick being capable of internally transporting liquid water along its length is provided.

## SUMMARY

According to the present invention there is provided a particle condensation system according to claim 1.

Embodiments are defined by the dependent claims 2 to 11.

## BRIEF DESCRIPTION OF THE DRAWINGS

Figure 1 is a schematic diagram of a wick moisture sensor including a reflectivity detector, layers of wick and a light-absorbing layer.
Figure 2 is a cross-section view of the wick sensor, showing a portion of the wick.
Figure 3 is a schematic diagram of a three-stage water condensation system showing placement of the wick sensor.
Figures 4A is a graph of the response of the wick sensor while the wick was operated in a mode in which it was constantly losing water.
Figure 4B is a graph illustrating the particle counting efficiency of the system as the ratio of this indicated particle concentration to that measured by a standard, benchtop condensation particle counter.
Figure 4C is a graph of a time series of ambient particle number concentrations.
Figure 5 is a graph of the dependence of the exiting flow dew point in the operating temperature of the moderator stage of a threestage condensation growth system for three ranges of input dew point.
Figures 6A is a graph of the response of the wick sensor in a second embodiment of a system while the wick was operated in a mode in which it was constantly losing water.
Figure 6B is a graph illustrating the particle counting efficiency of in a second embodiment of a system as the ratio of this indicated particle concentration to that measured by a standard, benchtop condensation particle counter.
Figure 6C is a graph of a time series of ambient particle number concentrations in a second embodiment of a system.

## DETAILED DESCRIPTION

A wick sensor comprising an optical device configured to assess the extent to which the wick material is saturated with liquid is disclosed. The reflectivity of the wick, or optical appearance, changes with the saturation level of the wick. Typically, a wick material used in condensation systems is an absorbent material with a porous structure. Such materials scatter light when dry, due to their microporous structure. As these pores fill with liquid, the wick material becomes translucent. The wick sensor disclosed herein monitors this translucence. The wick sensor includes a reflectivity sensor, consisting of a small light emitting diode (in the infrared or at other wavelengths) and photo transistor. These components, and associated circuit board, are mounted in a housing placed immediately on the outside of the wick, and are positioned such that the sensor views the outer layer of the wick. A dark object is placed immediately underneath the layer of wick viewed by the reflectivity sensor. A clear window in the sensor housing allows the sensor to view the wick while protecting the sensor and its electronics from the moist wick environment.

When the wick is moist, much of the incident light from the sensor is transmitted through the wick material and absorbed, such that the reflected light signal is small. As the material dries, the reflected light signal rises, and a portion of the light scattered from the outer layer of the wick material is captured by a photo detector. This change is most apparent when a dark material is placed underneath the outer layer of the wick, as it makes the wick appear dark when saturated. The wick signal can be used to warn the operator of a drying wick, or it can be used to control the instrument operating parameters.

One application of the wick sensor is to three-stage water-based condensation systems used for measuring ambient air. With this system the water-saturation of the wick can either increase or decrease during operation, depending on ambient conditions and operating temperatures. During operation water may be taken up by the wick due to moisture present in the air that is sampled. Alternatively, the wick can lose water due to the evaporation that must occur as part of the condensation process. The net change in water held by the wick can be regulated through control of the operating temperature of the final, water recovery stage. The wick sensor of this invention indicates the saturation level of the wick, and provides feedback needed to control the wick saturation level. This feedback enables operation such that the extent of water vapor uptake and removal are balanced. If operated in an environment with sufficient moisture in the sampled airstream, the wick sensor enables operation of the system over extended periods of time, weeks to months, without need to replenish the wick.

This wick sensor assesses the moisture content of a microporous material such as is commonly used as a wick in airborne particle condensation systems. The wick sensor measures the optical reflectivity of this material. This reflectivity, or optical appearance, changes when the wick becomes saturated with a liquid, such as water or alcohol.

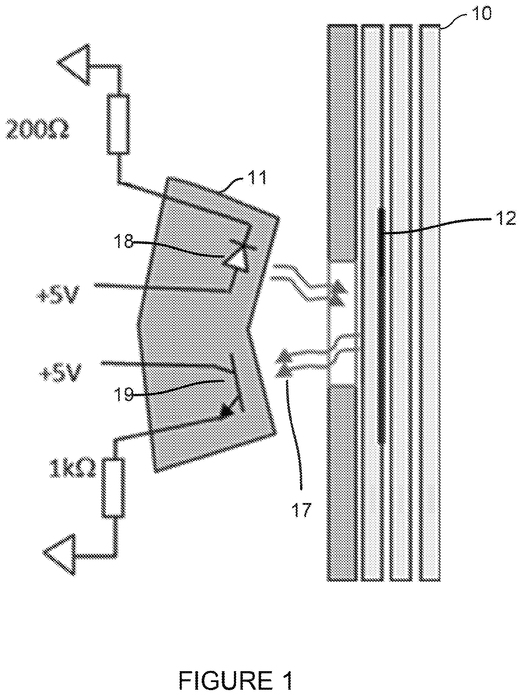

Figure 1 illustrates the operating principle of the wick sensor. The wick is formed from several layers of a membrane filter material 10. This appears bright white when dry, due to its microporous structure which scatters light. As the wick becomes saturated, these pores fill with water or other liquid, and the wick becomes translucent. The wick sensor detects this change in the optical appearance. Specifically, the wick sensor has a reflectivity sensor 11 with a small light-emitting diode 18 and photo transistor 19 that is mounted to directly view the outer layer of the wick. A piece of dark material 12, is placed underneath one layer of the wick material, immediately opposite the sensor. All of these components are housed in the interior of the instrument, and are shielded from stray ambient light. When the wick is dry, light 17 from the light-emitting is reflected from the wick surface, and detected by the photo transistor. As the wick becomes translucent, the dark material under the wick becomes visible, and the amount of reflected light is reduced. In this manner, the signal from the photo transistor is small when the wick is wet, and increases as the wick dries.

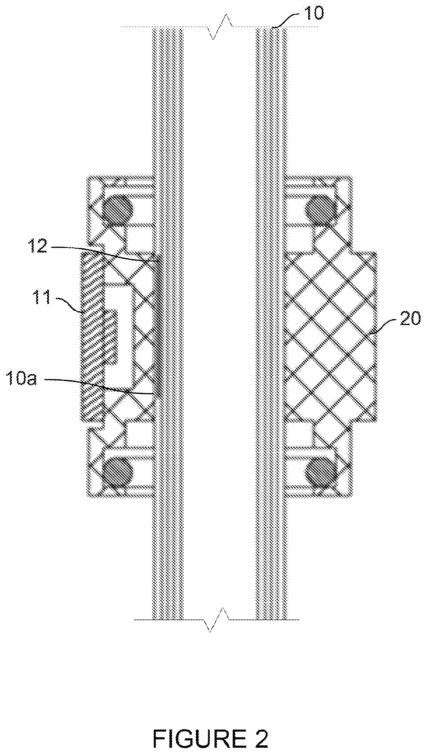

Figure 2 shows and example implementation of the wick sensor 11. The wick 10 is formed by rolling a sheet of commercially available membrane filter media (such as Merck Millipore DVPP, Merck KGaA, Darmstadt, Germany) to form a tube. In a condensation particle counter, this tube lines the walls through which the air flows. A piece of dark-colored filter 12 (mixed cellulose esters membrane, Merck Millipore AABP) is placed underneath an outer layer of the wick. Alternatives for the dark material 12 include coloring the wick with a black, water-proof marker, and installing a piece of gray or other non-white mylar film. The color selected should be such that it absorbs enough light at the wavelength of the light source to give a detectable signal change. The wick sensor 11, which may comprise a small circuit board containing an LED-phototransistor pair (not shown) is attached to a housing 20 that surrounds the wick 10. In this implementation a Fairchild QRE1113 sensor was used. The wick sensor 11 is positioned such that the sensor looks directly through one layer 10a of the porous wick material to the black filter media. A sensor housing 20 is made of a clear material and protects the reflectivity sensor from the moist wick environment. Alternatively, this housing may be equipped with a clear window that allows the reflectivity sensor to view the wick. When the wick is wet, this incident light is transmitted through the wick material and absorbed, such that the reflected light signal is small. As the material dries, the reflected light signal rises, and a portion of the light scattered from the outer layer of the wick material is captured by the photo detector.

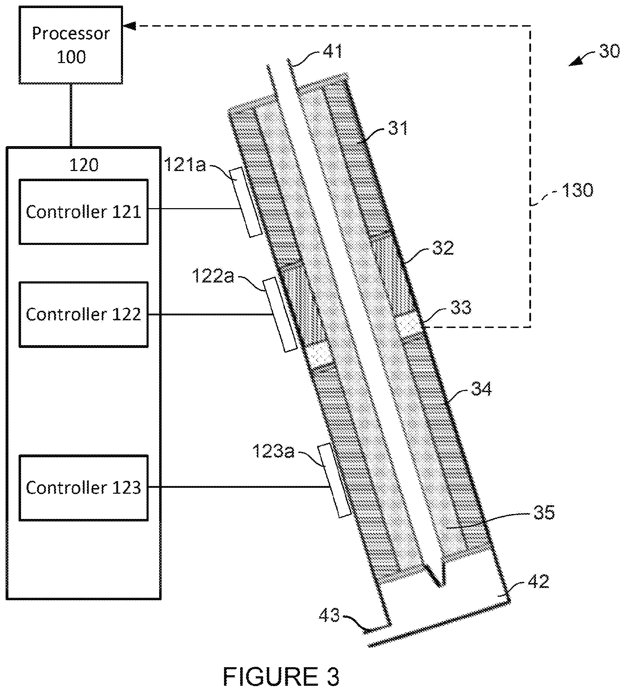

Figure 3 illustrates the incorporation of the wick sensor with a three-stage, water-based airborne particle condensation system, such as that described by U.S. Patent 9,610,531 (Hering et al.). This system has three temperature regions through which air flows. These are a conditioner 31 that is cold, an initiator 32 that is warm, and a moderator 34 that is cold. A wick 35 wetted with water spans all three temperature regions. The wick sensor 33 is mounted in a housing between the initiator and moderator temperature stages. An air sample enters the device through inlet 41 into the cold conditioner region 31, where the flow cools and water vapor from the sampled air deposits onto the wick. Next, this cooled flow enters the warm initiator region 32, where water evaporates from the wick into the flow. Because water vapor transport is faster than heat transport, the flow relative humidity increases above 100%, typically to about 130-140%, in the center core of the flow. Under these super-saturated conditions water condenses on the particles present in the air stream, initiating the formation of droplets. In the final, cool moderator stage 34, the droplets continue to grow through condensation, while at the same time water vapor is recovered by the wick. Capillary action transports the liquid water back to the warm, initiator portion of the wick. The rate of water vapor recovery is controlled by the temperature of the walls in this moderator stage, which in turn is set based on the wick sensor reading. The components 31, 32, 34 and 35 are collectively referred to as a "growth tube" 30. Flow exits the growth tube through a device 42 to and exit port 43. The device 42 may be an optical detector to count the droplets formed by the growth tube, or it may be a collector to capture these droplets, or it may contain a set of aerodynamic focusing lenses to concentrate the particles into a small portion of the flow, or it may provide a means of electrically charging the droplets. Device 30 may also include a processing device 100 which receives feedback signal 130 from the wick sensor 33, and may be programmed to control a temperature controller 120. The processing device may be any programmable hardware or microprocessor operable to execute instructions to control the temperature controller. The temperature controller may comprise one or more individual controllers 121 122, 123, each of which may regulate the electrical power directed to a respective heating element and/or cooling element 121a, 122a, 123a, such elements generally illustrated as being coupled to the respective regions 31, 32 and 34, allowing automatic control the instrument 30 during operation.

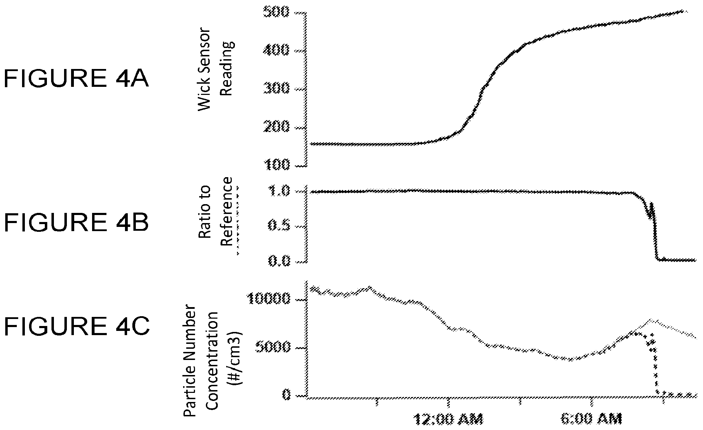

Figures 4A - 4C illustrate the performance of the wick sensor installed in a three-stage, water-based particle condensation system like that illustrated in Figure 3. To test the wick sensor, the condensation system is operated in a manner to purposely dry the wick. A droplet detector at the exit of the growth tube counts the number concentration of particles that are grown to form droplets. It is well known that the condensation growth system will only produce detectable sized droplets from the sampled air stream if the wick is sufficiently wet. Thus the counting efficiency of the combined condensation system and droplet detector tests whether the wick is wet. Figure 4A is a time series of the wick sensor reading, and Figure 4C a time series of ambient particle number concentrations. Figure 4B illustrates the particle counting efficiency of the system. This efficiency (4B) is shown as the ratio of this indicated particle concentration to that measured by a standard, benchtop condensation particle counter. The data shows an increase in the wick sensor signal shortly after midnight, due to an increase in reflected light, indicating that the wick that is beginning to dry. The particle number concentrations measured does not change with respect to the reference for another 8 hours, at which point the wick sensor signal is quite high. These data show that this wick sensor provides ample signal of a drying wick hours in advance of loss of instrument performance.

Typically, particle condensation systems require that the wick that holds the condensing fluid be continually replenished via liquid injection, or physical contact with a liquid reservoir. Using the wick sensor, a particle condensation system capable of maintaining a properly wetted wick through recovery of water vapor from the sampled air stream is provided. This is done by using the wick sensor as a feedback signal to set the temperature of the third, moderator stage. It is the temperature of this stage that determines the amount of water vapor in the flow that exits the instrument. Importantly, model calculations presented in US Patent 8,801,838 (Hering et al.), and laboratory data show that the particle activation and condensational growth is independent of operating temperature of the third and final moderator stage. Thus the moderator stage operating temperature can be adjusted to control the amount of water recaptured by the wick, without affecting instrument performance. The wick sensor reading can be used to adjust the moderator temperature to add or remove water from the wick, as needed. If the wick is dryer than desired, the moderator temperature is lowered, and if it is wetter than desired, the moderator temperature is raised. A PID control algorithm can be used to adjust the moderator temperature to add or remove water from the wick, as needed.

In instances in which the instrument 30 is configured to measure the relative humidity and temperature of the sampled air stream, the corresponding dew point value can be used as a first estimate of the temperature set point of the moderator stage 34. In this instance, the control algorithm operable by the processor to control the temperature of the moderator stage 34 reduces to a function of this input dew point, and a simple proportional gain, as follows:

$$T_{mod,new} = f(DP_{in}) + g*(w_{targ} - w)$$

where:

$T_{mod,new}$ is the set point temperature for the Moderator
$f(DP_{in})$ is a prediction of the $T_{mod}$ necessary to match $OP_{in,}$
$g$ is the feedback gain
$w_{targ}$ is the desired wick sensor reading
$w$ is the actual wick sensor reading

The reflectivity, and hence the raw wick sensor output, increases as the wick dries. Hence ($w_{targ}$ - w) is a positive value when the wick is wetter than the target value, and the algorithm will increase the set point for the moderator temperature. Similarly, if ($w_{targ}$ - w) is a negative, the wick is drier than the target value, and the algorithm will decrease the set point for the moderator temperature. In other words, g is positive. The function $f(DP_{in})$ returns a first estimate the moderator temperature needed to make the water vapor content of the flow exiting the instrument equal that which enters. This function is determined experimentally, and is dependent on the specific system design, but is generally, it is independent of the input relative humidity.

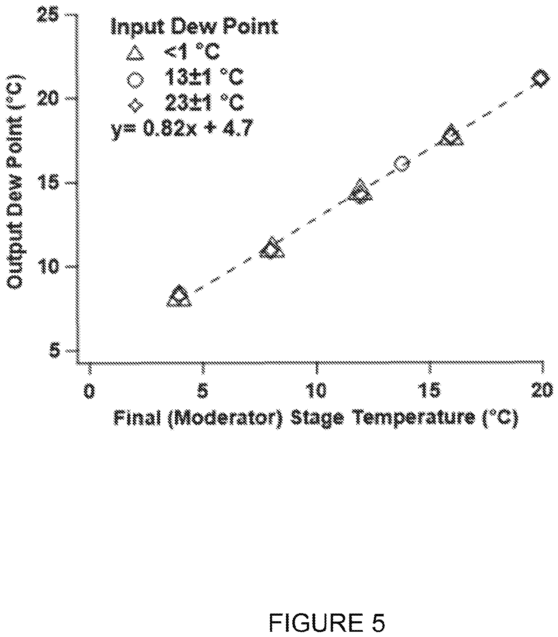

Figure 5 presents data for the function $f(OP_{in})$ obtained from a three-stage, water-based particle condensation particle counter equipped with a wick sensor. This system follows the design of Figure 3, with a continuous wick spanning the cooled conditioner, the warm initiator, the wick sensor region and the final, cooled moderator stage. It has an optical detector at the exit of the growth tube to count the number of droplets formed, from which the total particle number concentration is derived. The water content of the flow exiting the system, as indicated by the exiting dew point, is the same regardless of the dew point of the entering flow, and is dependent only on the operating temperatures of the system. This makes $f(DP_{in})$ a good first guess for the moderator temperature set point. However, this is not precise, and over time errors will accumulate. With the wick sensor, this set point can be adjusted as needed to maintain the wick at the proper moisture level.

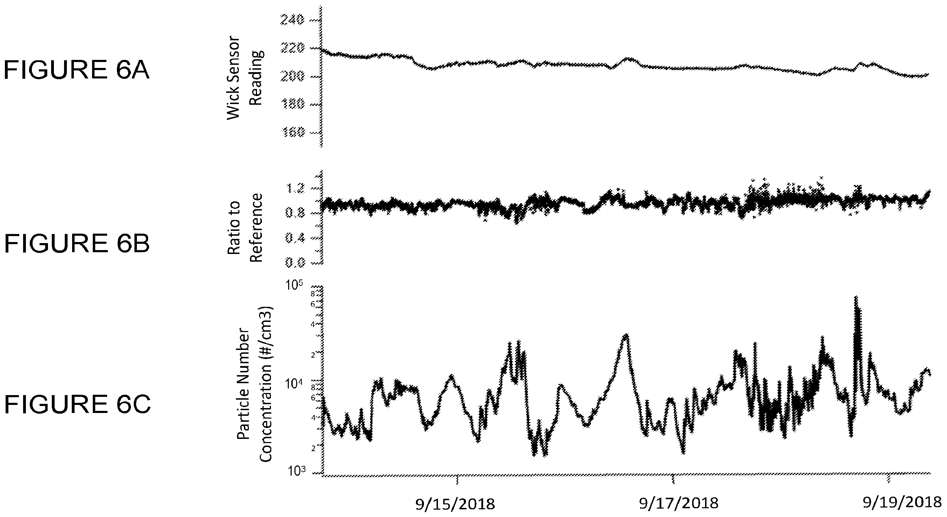

Figures 6A - 6C show data for a wick-sensor equipped, three-stage, water-based condensation system equipped with an optical detector for measuring particle number concentrations. Figure 6A is a time series of the wick sensor reading, and Figure 6C a time series of ambient particle number concentrations. Figure 6B illustrates the particle counting efficiency of the system. With the algorithm presented above, the wick sensor reading remains constant, and the instrument readings are comparable to a benchtop particle counter. During these measurements, the ambient dew point ranged from 10 to 14°C. With the wick-sensor and three-stage water condensation systems, experimental results have provided months of continuous operation without replenishing the wick. In other words, all the water needed for condensational growth can be captured from the sampled air stream, with the wick sensor signal ensuring that the wick maintains the ideal saturation level, neither too wet nor too dry.

In situations where the prevailing ambient air contains very little water vapor, i.e. when the prevailing dew point is low, the sustained operation requires some humidification of the sampled air stream. This can be accomplished by passing the sample air flow through a short piece of Nafion (R) tubing (available from Permapure, Lakewood, NJ) that is surrounded by liquid water, or by high humidity air such as can be obtained using a hygroscopic salt such as sodium polyacrylate.

The implementation of the wick sensor presented here is for a water-based condensation system adapted to particle counting. This same approach could be used for a condensation system for particle collection, or aerodynamic particle focusing. The wick sensor is applicable to alcohol-based condensation system using a microporous wick, or to any working fluid with a similar refractive index such that the light scattering from the wick decreases as the pores are filled with the liquid. Although the implementation here is presented with a condensation system without a liquid reservoir, it could also be used in a system where the working fluid is injected into the wick. In this instance the sensor would minimize the amount of working fluid consumed.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A particle condensation system, comprising:

   a growth tube (30) containing a wick (10) comprised of a microporous material which is configured to reflect light when dry and to become translucent as pores in the wick fill with liquid, wherein the microporous material is wettable by the liquid;
   **characterized by** a wick liquid sensor (11) comprising
   a light source (18) configured to illuminate a surface of the wick in the growth tube; and
   a detector (19) configured to detect an intensity of light which is reflected by the wick and determine the intensity of reflected light;
   wherein the detector (19) is configured to measure a liquid saturation of the wick (10) based on the intensity of the wick reflected light.

2. The particle condensation system of claim 1, wherein the microporous material of the wick liquid sensor is a membrane filter.

3. The particle condensation system of claim 1, wherein the liquid is water or alcohol.

4. The particle condensation system of claim 1, wherein the light source (18) and detector (19) are provided in a housing (20) mounted adjacent to the wick (10).

5. The particle condensation system of claim 1, wherein the wick liquid sensor further includes a dark material (12) positioned opposite the light source (18) and detector (19) below at least one layer of the microporous material.

6. The particle condensation system of claim 1, wherein reflectivity of the wick decreases as saturation content of the liquid in the wick increases.

7. The particle condensation system of claim 1, the growth tube further including an inlet (41) and an outlet (43), the system including a humidification system at the inlet (41).

8. The particle condensation system of claim 7, wherein the humidification system uses a hygroscopic material such as sodium polyacrylate.

9. The system of claim 7, wherein the growth tube (30) has a first section (31), a second section (32) and a third section (34) though which air flows between the inlet (41) and the outlet (43), the temperature of the second section (32) is warmer than that of the first section (31) at the inlet (41) and the third section (34) at the outlet (43), wherein the wick liquid sensor (11; 33) is provided in a housing between the second section (32) and the third section (34).

10. The system of claim 1, wherein the reflectivity of the wick (35) increases as the wick (35) dries.

11. The system of claim 1, wherein an output of the sensor (33) is used as feedback signal to regulate a temperature or other operating parameter of the system.

## Patentansprüche

1. Partikelkondensationssystem, umfassend:

ein Wachstumsrohr (30), das einen Docht (10) enthält, der aus einem mikroporösen Material besteht, das so konfiguriert ist, dass es im trockenen Zustand Licht reflektiert und durchscheinend wird, wenn sich die Poren in dem Docht mit Flüssigkeit füllen, wobei das mikroporöse Material durch die Flüssigkeit benetzbar ist;
**gekennzeichnet durch** einen Docht-Flüssigkeitssensor (11) umfassend
eine Lichtquelle (18), die so konfiguriert ist, dass sie eine Oberfläche des Dochts im Wachstumsrohr beleuchtet; und
einen Detektor (19), der so konfiguriert ist, dass er eine Intensität des Lichts, das vom Docht reflektiert wird, erfasst und die Intensität des reflektierten Lichts bestimmt;
wobei der Detektor (19) so konfiguriert ist, dass er eine Flüssigkeitssättigung des Dochts (10) auf der Basis der Intensität des vom Docht reflektierten Lichts misst.

2. Partikelkondensationssystem gemäß Anspruch 1, wobei das mikroporöse Material des Docht-Flüssigkeitssensors ein Membranfilter ist.

3. Partikelkondensationssystem gemäß Anspruch 1, wobei die Flüssigkeit Wasser oder Alkohol ist.

4. Partikelkondensationssystem gemäß Anspruch 1, wobei die Lichtquelle (18) und der Detektor (19) in einem Gehäuse (20) vorgesehen sind, das neben dem Docht (10) montiert ist.

5. Partikelkondensationssystem gemäß Anspruch 1, wobei der Docht-Flüssigkeitssensor ferner ein dunkles Material (12) beinhaltet, das gegenüber der Lichtquelle (18) und dem Detektor (19) unter mindestens einer Schicht des mikroporösen Materials angeordnet ist.

6. Partikelkondensationssystem gemäß Anspruch 1, wobei das Reflexionsvermögen des Dochts mit zunehmendem Sättigungsgehalt der Flüssigkeit im Docht abnimmt.

7. Partikelkondensationssystem gemäß Anspruch 1, wobei das Wachstumsrohr ferner einen Einlass (41) und einen Auslass (43) beinhaltet, wobei das System ein Befeuchtungssystem am Einlass (41) beinhaltet.

8. Partikelkondensationssystem gemäß Anspruch 7, wobei das Befeuchtungssystem ein hygroskopisches Material wie Natriumpolyacrylat verwendet.

9. System gemäß Anspruch 7, wobei das Wachstumsrohr (30) einen ersten Abschnitt (31), einen zweiten Abschnitt (32) und einen dritten Abschnitt (34) aufweist, durch die Luft zwischen dem Einlass (41) und dem Auslass (43) strömt, die Temperatur des zweiten Abschnitts (32) wärmer ist als die des ersten Abschnitts (31) am Einlass (41) und des dritten Abschnitts (34) am Auslass (43), wobei der Docht-Flüssigkeitssensor (11; 33) in einem Gehäuse zwischen dem zweiten Abschnitt (32) und dem dritten Abschnitt (34) vorgesehen ist.

10. System gemäß Anspruch 1, wobei das Reflexionsvermögen des Dochtes (35) zunimmt, wenn der Docht (35) trocknet.

11. System gemäß Anspruch 1, wobei eine Ausgabe des Sensors (33) als Rückkopplungssignal verwendet wird, um eine Temperatur oder einen anderen Betriebsparameter des Systems zu regeln.

## Revendications

1. Un système de condensation de particules comprenant :

un tube de croissance (30) contenant une mèche (10) constituée d'un matériau microporeux configuré pour réfléchir de la lumière lorsqu'il est sec et pour devenir translucide lorsque des pores de la mèche se remplissent de liquide, dans lequel le matériau microporeux peut être mouillé par le liquide ;
**caractérisé par** un capteur de liquide à mèche (11) comprenant
une source de lumière (18) configurée pour éclairer une surface de la mèche dans le tube de croissance ; et
un détecteur (19) configuré pour détecter une intensité de lumière réfléchie par la mèche et déterminer l'intensité de la lumière réfléchie ; le détecteur (19) est configuré pour mesurer la saturation en liquide de la mèche (10) en fonction de l'intensité de la lumière réfléchie par la mèche.

2. Le système de condensation de particules de la revendication 1, dans lequel le matériau microporeux du capteur de liquide à mèche est un filtre à membrane.

3. Le système de condensation de particules de la revendication 1, dans lequel le liquide est de l'eau ou de l'alcool.

4. Le système de condensation de particules de la revendication 1, dans lequel la source de lumière (18) et le détecteur (19) sont fournis dans un boîtier (20) monté à côté de la mèche (10).

5. Le système de condensation de particules de la revendication 1, dans lequel le capteur de liquide à mèche comprend en outre un matériau sombre (12) placé à l'opposé de la source de lumière (18) et du détecteur (19) sous au moins une couche du matériau microporeux.

6. Le système de condensation de particules de la revendication 1, dans lequel la réflectivité de la mèche diminue à mesure que la teneur en saturation du liquide dans la mèche augmente.

7. Le système de condensation de particules de la revendication 1, le tube de croissance comprenant en outre une entrée (41) et une sortie (43), le système comprenant un système d'humidification à l'entrée (41).

8. Le système de condensation de particules de la revendication 7, dans lequel le système d'humidification utilise un matériau hygroscopique tel que le polyacrylate de sodium.

9. Le système selon la revendication 7, dans lequel le tube de croissance (30) a une première section (31), une deuxième section (32) et une troisième section (34) à travers laquelle de l'air circule entre l'entrée (41) et la sortie (43), la température de la deuxième section (32) est plus chaude que celle de la première section (31) à l'entrée (41) et de la troisième section (34) à la sortie (43), dans lequel le capteur de liquide de la mèche (11 ; 33) est placé dans un logement entre la deuxième section (32) et la troisième section (34).

10. Le système selon la revendication 1, dans lequel la réflectivité de la mèche (35) augmente au fur et à mesure que la mèche (35) sèche.

11. Le système selon la revendication 1, dans lequel une sortie du capteur (33) est utilisée comme signal de retour pour réguler une température ou un autre paramètre de fonctionnement du système.

FIGURE 1

FIGURE 2

FIGURE 3

FIGURE 4A

FIGURE 4B

FIGURE 4C

FIGURE 5

FIGURE 6A

FIGURE 6B

FIGURE 6C

**REFERENCES CITED IN THE DESCRIPTION**

**Patent documents cited in the description**

- US 9610531 B2
- US 9610531 B, Hering

- US 8801838 B, Hering